# EUROPÄISCHE PATENTANMELDUNG

(11) **EP 4 606 514 A1**
(43) Veröffentlichungstag der Anmeldung: **27.08.2025**
(21) Anmeldenummer: 25156430.8
(22) Anmeldetag: 07.02.2025
(51) Int. Cl.: B23P 19/06, B21D 22/02, B21D 37/16

(54) **VORRICHTUNG ZUM PRESSHÄRTEN UND/ODER UMFORMEN EINES BLECHTEILS MIT INTEGRIERTER EINRICHTUNG ZUM SETZEN VON FUNKTIONSELEMENTEN SOWIE ENTSPRECHENDES VERFAHREN**

(30) Priorität: 14.02.2024 DE 102024104167
(71) Anmelder: Profil Verbindungstechnik GmbH & Co. KG, 61381 Friedrichsdorf (DE)
(72) Erfinder: JENE, Tobias, 61381 Friedrichsdorf (DE); MAHLME, Amer, 61200 Wölfersheim (DE); LEBEAU, Andreas, 61381 Friedrichsdorf (DE)
(74) Vertreter: Manitz Finsterwald Patent- und Rechtsanwaltspartnerschaft mbB

(57) **Zusammenfassung**

Die vorliegende Erfindung betrifft eine Vorrichtung zum Bearbeiten eines Werkstücks umfassend zumindest eine Presseinrichtung mit einer ersten Werkzeughälfte und mit einer zweiten Werkzeughälfte, die insbesondere zur Umformung und/oder zum Presshärten des Werkstücks in einer Pressbewegung aufeinander zu bewegbar sind, und zumindest eine Setzeinrichtung zur Befestigung zumindest eines Funktionselements in einer Setzbewegung an einem Setzpunkt an dem Werkstück, wobei die Setzeinrichtung an der ersten Werkzeughälfte oder der zweiten Werkzeughälfte angeordnet ist. Die erste und/oder die zweite Werkzeughälfte weisen eine Konditioniereinrichtung auf, mit der die erste Werkzeughälfte und/oder die zweite Werkzeughälfte thermisch beeinflussbar, insbesondere selektiv thermisch beeinflussbar ist.

## Beschreibung

Die Erfindung betrifft eine Vorrichtung zum Bearbeiten eines Werkstücks und ein entsprechendes Verfahren.

In vielen Fertigungsprozessen, beispielsweise im Kraftfahrzeugbau, werden Werkstückrohlinge oder Halbzeug, insbesondere metallische Blechteile, durch Umformprozesse in die gewünschte Form gebracht. Oftmals werden sie im Rahmen solcher Prozesse auch mit Funktionselementen versehen.

Derartige Elemente dienen beispielweise dazu, ein Objekt an dem Werkstück zu befestigen. Dies ist häufig nicht ohne weiteres direkt möglich, insbesondere wenn die Befestigung lösbar sein soll oder ein stoffschlüssiges Befestigungsverfahren ungeeignet ist. Häufig tritt die Problematik bei flachen oder vergleichsweise dünnen Werkstücken auf, wie etwa Blechteilen, da sie nicht einfach mit einem Loch mit einem belastbaren Innengewinde versehen werden können. Die Lösung für dieses Problem sind u.a. Mutter- oder Bolzenelemente, die in das Blechteil eingebracht werden und die das erforderliche Gewinde oder andere Funktionsabschnitte zur Befestigung des Objekts aufweisen. Diese Elemente können in vorgelochte Löcher eingebracht werden oder selbststanzend sein.

Die Befestigung der Elemente an dem Werkstück kann eine große Herausforderung sein, insbesondere wenn besonders feste Werkstoffe im Spiel sind, z.B. pressgehärtete Werkstoffe, oder wenn die geometrischen Verhältnisse komplex sind.

Es ist eine Aufgabe der vorliegenden Erfindung, eine Vorrichtung zum Bearbeiten eines Werkstücks zu schaffen, mit der sich auch Werkstücke mit herausfordernden Eigenschaften auf einfache Weise bearbeiten, insbesondere umformen und zuverlässig mit Funktionselementen bestücken lassen.

Diese Aufgabe wird durch eine Vorrichtung mit den Merkmalen des Anspruchs 1 gelöst.

Erfindungsgemäß umfasst die Vorrichtung zum Bearbeiten eines Werkstücks zumindest eine Presseinrichtung mit einer ersten Werkzeughälfte und mit einer zweiten Werkzeughälfte, die in einer Pressbewegung aufeinander zu bewegbar sind, insbesondere zur Umformung (bevorzugt Warmumformung) und/oder zum Presshärten des Werkstücks. Ferner ist zumindest eine Setzeinrichtung zur Befestigung zumindest eines Funktionselements in einer Setzbewegung an einem Setzpunkt an dem Werkstück vorgesehen. Um das Setzen oder Fügen der Elemente zu optimieren, können die erste und/oder die zweite Werkzeughälfte eine Konditioniereinrichtung aufweisen, mit der die erste Werkzeughälfte und/oder die zweite Werkzeughälfte thermisch beeinflussbar, insbesondere selektiv thermisch beeinflussbar ist. Da das Material des Werkstücks über die Werkzeughälften entsprechend gekühlt und/oder aufgeheizt werden kann, kann stets lokal ein für den Setzprozess geeignetes Temperaturfenster eingestellt werden.

Die Zieltemperatur kann also bedarfsgerecht gewählt werden. Beispielsweise kann es bedeuten, dass durch das thermische Konditionieren (lokal) Raumtemperatur angestrebt wird und dass in Bereichen, die thermisch nicht mehr durch die Wirkung der thermischen Konditionierung dominiert werden, höhere oder niedrigere Temperaturen herrschen.

Grundsätzlich ist es möglich, dass die Vorrichtung zwei oder mehr Presseinrichtungen und/oder Setzeinrichtungen umfasst.

Herkömmlicherweise werden Werkstücke zunächst in entsprechenden Pressen umgeformt und/oder gehärtet. Anschließend werden sie einer Setzeinrichtung zugeführt, mittels derer die Funktionselemente an den Werkstücken befestigt werden. Nach Warmumformprozessen und insbesondere nach einem Presshärten ist ein Setzen oder Fügen von mechanischen Funktionselementen aufgrund der Härte des erzeugten Werkstücks oftmals nur noch mit erheblichem Aufwand möglich. Durch die erfindungsgemäß vorgesehene Konditionierungseinrichtung, die insbesondere zusätzlich zu einer ggf. vorhandenen Heiz- oder Kühleinrichtung einer z.B. für ein Warmumformen ausgelegten Werkstückbearbeitungsvorrichtung vorgesehen ist, kann das Werkstück lokal in einem definierten Temperaturfenster gehalten werden, um das Setzen der Elemente zu vereinfachen oder sogar erst zu ermöglichen.

Die Verarbeitung kann bei Raumtemperatur erfolgen, beispielsweise wenn es sich bei dem Bearbeiten um einen Standardkaltformprozess handelt. Bei einem Warmunformen und/oder Presshärten können Verarbeitungstemperaturen von über 900°C erreicht werden, insbesondere Temperaturen in einem Bereich von 450°C bis 850°C. Diese Angaben gelten sowohl für die angestrebte Temperatur des Werkstücks beim Bearbeiten als auch für die Temperatur der Werkzeughälften.

Durch die erfindungsgemäße Vorrichtung können die Prozesse "Pressen" bzw. "Umformen" einerseits und "Element setzen" andererseits somit in einer einzigen Vorrichtung durchgeführt werden. Dadurch entfällt ein aufwändiger Arbeitsschritt, nämlich die Entnahme des Werkstücks aus der Presseinrichtung und die exakte Positionierung des umgeformten Werkstücks in der Setzeinrichtung.

Ein beispielhaftes Anwendungsgebiet der Vorrichtung ist das Fügen von mechanischen Funktionselementen in einen presshärtbaren, zumeist borlegierten Stahl, wie etwa 22MnB5 oder 34MnB5 mit oder ohne AlSi-Beschichtung.

Grundsätzlich kann die Vorrichtung zur Bearbeitung beliebiger Werkstücke verwendet werden. Bevorzugt ist sie jedoch zur Bearbeitung metallischer Werkstücke vorgesehen, insbesondere zur Bearbeitung von Blechteilen.

Als zu setzende Funktionselemente kommen beliebige Elemente in Betracht, beispielsweise Mutter- und/oder Bolzenelemente. Sie können mit Gewindeabschnitten versehen sein oder Funktionsabschnitte mit anderen Eigenschaften aufweisen. Beispielsweise sind derartige Funktionsabschnitte mit Rastelementen oder mit bestimmten Formelementen, wie etwa Nuten oder Rippen, versehen. Die Elemente sind bevorzugt metallisch.

Die Funktionselemente können selbststanzend sein. Das Werkstück kann jedoch auch bereits vorgelocht sein, sodass die Funktionselemente in bereits vorhandene Öffnungen eingebracht werden.

Die Funktionselemente können Nietelemente mit einem Nietabschnitt sein, der zur Fixierung der Elemente an dem Werkstück umgeformt wird, um einen Hinterschnitt zu bilden. Sie können aber auch Einpresselemente sein, die in das Werkstück eingepresst und kraftschlüssig an diesem fixiert werden.

Der Begriff "Werkzeughälfte" ist breit aufzufassen. Die Werkzeughälften können mehrteilig ausgeführt sein. Beispielsweise umfassen sie einen Grundkörper, der auch in einen Werkzeugaufbau integriert sein kann, und eine austauschbare Formbacke, die für den jeweiligen Anwendungsfall montiert wird. Es ist auch denkbar, dass eine der Werkzeughälften eine (bedarfsgerecht austauschbare) Matrize umfasst, die bei Betrieb der Vorrichtung mit der an der anderen Werkzeughälfte angeordneten Setzeinrichtung zusammenwirkt.

Insbesondere werden bei der Pressbewegung beide Werkzeughälften bewegt. Es ist aber auch denkbar, dass lediglich eine der Werkzeughälften bewegbar und die andere Werkzeughälften stationär angeordnet ist. Die Begrifflichkeit "aufeinander zu bewegbar" ist somit dahingehend zu verstehen, dass eine Relativbewegung der beiden Werkzeughälften realisierbar sein soll, durch die das Werkstück umgeformt wird.

Weitere Ausführungsformen der Erfindung sind in der Beschreibung, den Zeichnungen und den Ansprüchen angegeben.

Insbesondere ist die Konditioniereinrichtung derart ausgebildet und eingerichtet, dass die die erste und/oder die zweite Werkzeughälfte an und/oder in einem Bereich benachbart zu dem Setzpunkt selektiv thermisch beeinflussbar ist.

Die Konditioniereinrichtung kann derart ausgebildet und eingerichtet sein, dass ein gewünschtes Temperaturprofil in der ersten und/oder der zweiten Werkzeughälfte erzeugbar ist. Beispielsweise kann - ausgehend von dem Setzpunkt - ein 2D-Temperaturprofil erzeugt werden, so dass am Setzpunkt und/oder in einem benachbarten Bereich optimale Setzbedingungen herrschen, während andere Bereiche des Werkstücks anderen Temperaturen ausgesetzt sind. Es kann vorgesehen sein, dass bestimmte Bereiche unterschiedlich stark geheizt oder gekühlt werden. Es ist auch möglich, bestimmten Bereichen Wärme zuzuführen, während andere Bereiche gekühlt werden.

Gemäß einer weiteren Ausführungsform weist die Setzeinrichtung eine Konditioniereinrichtung auf, mit der die Setzeinrichtung und/oder das Werkstück und/oder das Funktionselement thermisch beeinflussbar, insbesondere selektiv beeinflussbar ist. Ein solche zusätzliche oder alternative Konditioniereinrichtung ermöglicht eine Einflussnahme auf die Setzbedingungen, um diese bedarfsgerecht anpassen zu können. Durch den Kontakt der Setzeinrichtung mit dem Werkstück und/oder mit dem Funktionselement kann die Konditioniereinrichtung der Setzeinrichtung bei geeigneter Anordnung und Ausgestaltung nicht nur auf diese selbst sondern eben auch auf das Werkstück und/oder das Funktionselement wirken.

Folgende Ausführungen gelten sowohl für die Konditioniereinrichtung der Werkzeughälften als auch für die der Setzeinrichtung.

Die Konditioniereinrichtung kann eine Heizeinrichtung und/oder eine Kühleinrichtung umfassen. Sie kann elektrisch (z.B. Heizdrähte) und/oder mit einem Fluid (z.B. von einem Gas oder einer Heiz- oder Kühlflüssigkeit durchströmbare Kanäle) betreibbar ist. Für ein Kühlen kann sogar flüssiger Stickstoff o.ä. in Betracht kommen.

Insbesondere ist die Konditioniereinrichtung derart ausgebildet und eingerichtet, dass thermische Beeinflussung zeitlich und/oder räumlich veränderbar ist. Zu diesem Zweck kann eine geeignete Steuereinrichtung vorgesehen sein, mit der die Konditioniereinrichtung selektiv steuerbar ist, wobei die Steuereinrichtung bevorzugt mit einer Steuereinheit der Vorrichtung in Verbindung steht oder in diese integriert ist.

Gemäß einer Ausführungsform umfasst die Setzeinrichtung zumindest eine Sensoreinrichtung, mit der eine auf das Funktionselement wirkende Setzkraft und/oder zumindest ein charakteristischer Parameter der Setzbewegung erfassbar ist. Durch einen oder mehrere setzkopfintegrierte Sensoren wird eine Dokumentation z.B. der Fügekraft und/oder des Fügeweges zur Bewertung der Qualität der während des (Warm)Umformens und/oder Presshärtens hergestellten mechanischen Funktionselementverbindung möglich.

In ähnlicher Weise können die erste und/oder die zweite Werkzeughälfte zumindest eine Sensoreinrichtung umfassen, mit der eine zwischen den Werkzeughälften wirkende Presskraft und/oder ein charakteristischer Parameter der Pressbewegung und/oder ein charakteristischer Parameter der ersten und/oder der zweiten Werkzeughälfte erfassbar ist. Ein charakteristischer Parameter der Pressbewegung können ein Betrag des zurückgelegten Wegs, deren Geschwindigkeit und/oder deren Beschleunigung sein; ein charakteristischer Parameter der Werkzeughälften kann beispielsweise deren Temperatur sein.

Bevorzugt wird der charakteristische Parameter als Funktion der Zeit erfasst.

Der Sensoreinrichtung kann eine Steuereinrichtung zugeordnet sein, die bevorzugt mit einer Steuereinheit der Vorrichtung in Verbindung steht oder in diese integriert ist

Die Setzeinrichtung kann an der ersten Werkzeughälfte oder der zweiten Werkzeughälfte angeordnet und unabhängig von der Presseinrichtung betreibbar sein. Durch die Entkopplung des Betriebs der Presseinrichtung und der Setzeinrichtung können die Pressbewegung und die Setzbewegung bedarfsgerecht aufeinander abgestimmt werden. Beispielsweise kann eine Setzbewegung eingeleitet werden, wenn das (eventuell bereits - teilweise - umgeformte) Werkstück sich in einem bestimmten Zustand befindet, der für das Setzen oder Fügen der Elemente besonders geeignet ist. Z.B. kann der Setz- oder Fügezeitpunkte unter Berücksichtigung des Bauteilwerkstoffes und/oder der Bauteildicke sowie der angestrebten mechanischen Verbindungseigenschaften eingestellt werden. Dadurch ist die Vorrichtung flexibler einsetzbar und es werden bessere Fügeergebnisse erzielt.

Gemäß einer Ausführungsform weist die Presseinrichtung eine Antriebseinrichtung auf, mit der die erste und die zweite Werkzeughälfte in einer linearen Pressbewegung aufeinander zu bewegbar sind. Alternativ oder zusätzlich weist die Setzeinrichtung einen Setzantrieb auf, mit dem das Funktionselements in einer linearen Setzbewegung gegen das Werkstück pressbar ist.

Gemäß einer weiteren Ausführungsform sind die Presseinrichtung und/oder die Setzeinrichtung derart ausgestaltet, dass die Pressbewegung und die Setzbewegung nicht parallel sind. Dadurch ist ein Fügen der Funktionselemente unter einem der Pressbewegung (z.B. Pressenfahr- bzw. Werkzeugschließrichtung) abweichendem Winkel möglich. Beispielsweise kann ein Element an einem Abschnitt des Werkstücks befestigt werden, der schräg zu der Richtung der umformen Bewegung angeordnet ist.

Die Presseinrichtung und/oder die Setzeinrichtung können elektrisch, hydraulisch oder pneumatisch betreibbar sein. Insbesondere können die Presseinrichtung und die Setzeinrichtung unterschiedliche Antriebsarten aufweisen.

Bevorzugt werden die Presseinrichtung und die Setzeinrichtung von einer gemeinsamen oder einer übergeordneten Steuereinheit gesteuert.

Die Werkzeughälfte, an der die Setzeinrichtung angeordnet ist, kann eine Öffnung aufweisen, in die die Setzeinrichtung ragt. Das Element kann so "durch" die entsprechende Werkzeughälfte an dem Werkstück befestigt werden.

Gemäß einer Ausführungsform der Vorrichtung ist diese derart ausgebildet und eingerichtet, dass ein selbststanzendes Funktionselement an dem Werkstück befestigbar ist. Zu diesem Zweck kann die der Setzeinrichtung gegenüberliegende Werkzeughälfte, eine Öffnung aufweist, durch die ein Stanzbutzen abführbar ist. Alternativ oder zusätzlich kann vorgesehen sein, dass die Setzeinrichtung eine Ausstoßvorrichtung zum Austreiben eines Butzens aus dem Funktionselement aufweist. Eine solche Ausstoßvorrichtung kann beispielsweise ein Stempel sein, der in Richtung der Setzbewegung axial bewegbar ist.

Die vorliegende Erfindung betrifft ferner ein Verfahren zum Bearbeiten eines Werkstücks, insbesondere wobei eine Vorrichtung gemäß einer der vorstehend beschriebenen Ausführungsformen eingesetzt wird. Dabei werden eine erste Werkzeughälfte und eine zweite Werkzeughälfte einer Presseinrichtung des Werkstücks in einer Pressbewegung aufeinander zu bewegt (insbesondere zur Umformung, bevorzugt Warmunformen und/oder zum Presshärten) und ein Funktionselement in einer Setzbewegung wird mittels einer Setzeinrichtung an einem Setzpunkt gegen das Werkstück gepresst wird, um es daran zu befestigen. Die erste und/oder die zweite Werkzeughälfte werden mittels einer Konditioniereinrichtung thermisch beeinflusst, insbesondere selektiv thermisch beeinflusst werden. Alternativ oder zusätzlich werden die Setzeinrichtung und/oder das Werkstück und/oder das Funktionselement mittels einer der Setzeinrichtung zugeordneten Konditioniereinrichtung thermisch beeinflusst, insbesondere selektiv beeinflusst werden.

Insbesondere erfolgt die thermische Beeinflussung erst nach Abschluss des Press-, Umform- und/oder Presshärteprozesses oder schließt sich unmittelbar an diesen an. Es sind jedoch auch denkbar, bereits während den genannten Prozessen bereits eine (lokale) thermische Beeinflussung anzustreben, um die Bedingungen zum Setzen des Elements zu optimieren. Diese Maßnahme kann zur Beschleunigung des Bearbeitungsvorgangs dienen und/oder dafür sorgen, dass das Material des Werkstücks lokal bestimmte Temperaturschwellen lokal nicht zu über- oder unterschreiten. In anderen Anwendungsfällen kann auch eine Pause zwischen dem jeweiligen Prozess und der thermischen Beeinflussung vorgesehen sein.

Um den Setzprozess zu optimieren, kann die thermische Beeinflussung gemäß einer Ausführungsform des Verfahrens räumlich und/oder zeitlich variiert werden.

Mittels einer optionalen Sensoreinrichtung können eine auf das Funktionselement wirkende Setzkraft und/oder zumindest ein charakteristischer Parameter der Setzbewegung erfasst werden, um die Herstellung der mechanischen Verbindung zwischen dem Element und dem Werkstück überwachen und dokumentieren zu können.

In analoger Weise können mittels einer optionalen Sensoreinrichtung eine zwischen den Werkzeughälften wirkende Presskraft und/oder ein charakteristischer Parameter der Pressbewegung und/oder ein charakteristischer Parameter der ersten und/oder der zweiten Werkzeughälfte erfasst wird, um den Press-, Umform-, Presshärt- und/oder Setzprozess besser zu überwachen.

Die Presseinrichtung und die Setzeinrichtung können gemäß einer Ausführungsform unabhängig voneinander betrieben werden. Insbesondere werden sie derart betrieben, dass die Setzbewegung einsetzt, nachdem die Pressbewegung zu einem Abschluss gekommen ist. Die Setzbewegung kann beispielsweise unmittelbar nach dem Abschluss der Pressbewegung einsetzten. Es ist aber auch möglich, einen zeitlichen Abstand zwischen den beiden Bewegungen vorzusehen, z.B. um abzuwarten, bis das Werkstück sich in einem für das Setzen oder Fügen des Elements geeigneten thermischen Zustand befindet

Alternativ können die Presseinrichtung und die Setzeinrichtung derart betrieben werden, dass die Setzbewegung nach einem Beginn und vor einem Abschluss der Pressbewegung einsetzt.

Gemäß einer Ausführungsform des Verfahrens sind die Presseinrichtung und die Setzeinrichtung derart ausgebildet und eingerichtet, dass die Setzbewegung und die Pressbewegung nicht parallel erfolgen.

Nachfolgend wird die vorliegende Erfindung rein beispielhaft anhand einer vorteilhaften Ausführungsform in Bezugnahme auf die beigefügten Zeichnungen erläutert. Es zeigen:
- Fig. 1 bis 3: eine Ausführungsform der erfindungsgemäßen Vorrichtung in verschiedenen Zuständen und
- Fig. 4: einen Ausschnitt der Fig. 3.

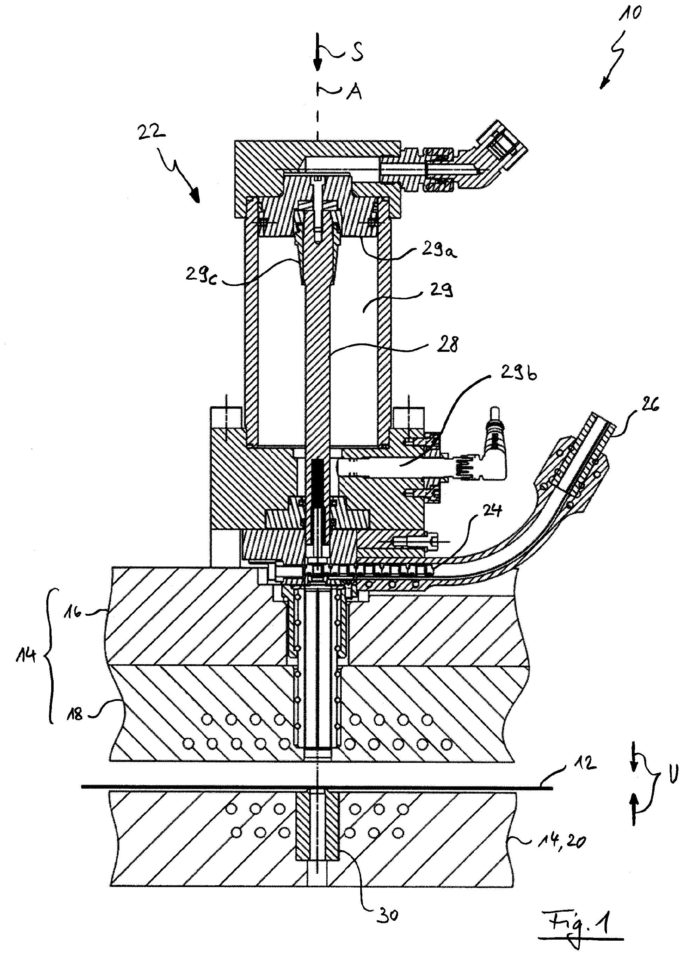

Fig. 1 zeigt eine Vorrichtung 10 zum Bearbeiten eines Werkstücks 12, das im vorliegenden Beispiel im Grundzustand ein ebenes Blechteil ist. Die Vorrichtung 10 umfasst eine erste Werkzeughälfte 14 mit einem Grundkörper 16 und einer Formbacke 18. der Grundkörper 16 kann an einem nicht gezeigten Werkzeugaufbau befestigt oder integraler Bestandteil eines Werkzeugaufbaus sein, beispielsweise eines C-Gestells. Ferner ist eine zweite Werkzeughälfte 14 vorgesehen, wobei in Fig. 1 aus Gründen der Übersichtlichkeit lediglich deren Formbacke 20 gezeigt ist. Im vorliegenden Beispiel soll das Werkstück 12 lokal verformt werden und in dem verformten Bereich an einem Setzpunkt ein Funktionselement 24 angebracht werden. Die Vorrichtung 10 kann auch zur Durchführung von Presshärt- oder Formhärtverfahren ausgelegt.

Anders als dargestellt können die Formbacken 18, 20 komplementär geformte, nicht-ebene Oberflächen aufweisen, um dem Werkstück 12 eine bestimmte Formgebung geben zu können. Eine Umformung des Werkstücks 12 erfolgt durch eine Annäherung der Formbacken 18, 20 in einer Umformbewegung, wobei diese aufeinander zu bewegt werden. Die Richtung der Bewegung der Backen 18, 20 ist mit Pfeilen U angedeutet. Es kann auch vorgesehen sein, dass nur eine der Backen 18, 20 bewegt wird und die andere Backe 20 bzw. 18 stationär angeordnet ist.

Die Vorrichtung 10 umfasst ferner eine Setzeinrichtung 22 von grundsätzlich bekannter Bauart. Im vorliegenden Beispiel ist sie hydraulisch betätigtbar. Es sind jedoch auch andere Antriebsarten denkbar. Der Setzeinrichtung 22 können Funktionselementen 24 mittels eines Schlauchs 26 zugeführt werden.

Das dem Werkstück 12 zugewandte Ende der Setzeinrichtung 22 ragt durch Öffnungen in dem Grundkörper 16 und der Formbacke 18, sodass die bereitgestellten Funktionselemente 24 mittels eines Setzstempels 28 in einer Setzbewegung S an das Werkstück herangeführt werden können.

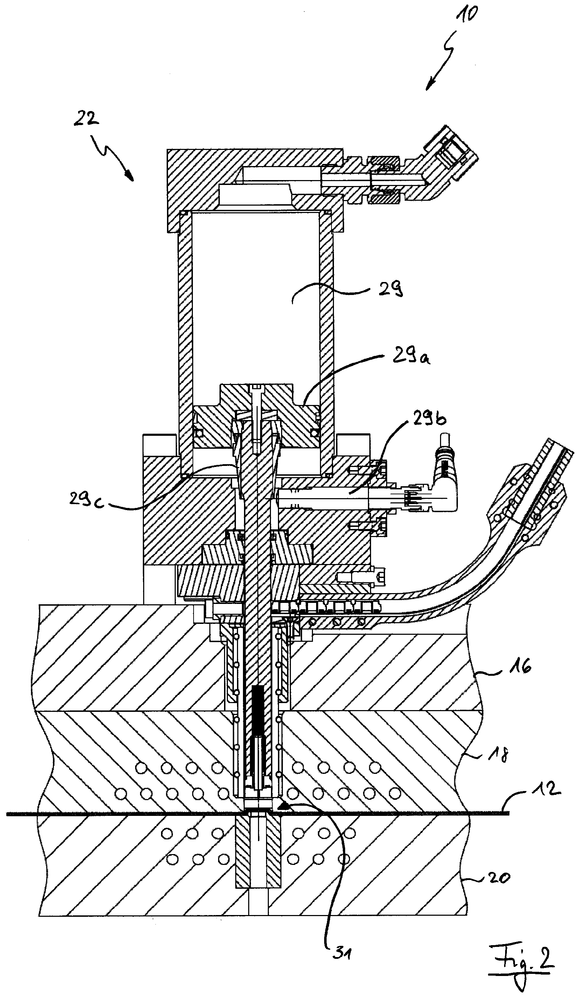

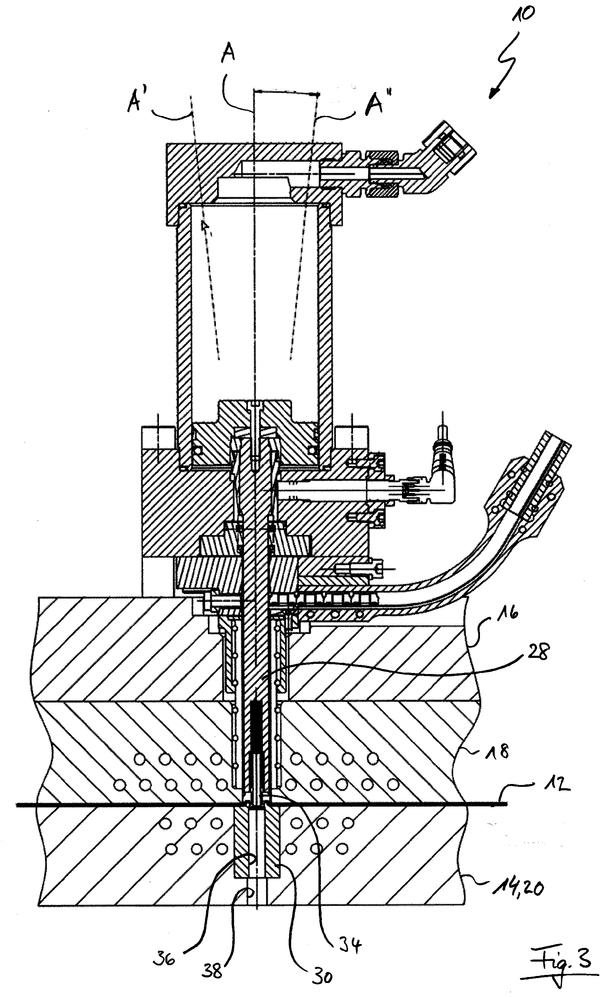

Der Setzstempel 28 wird durch Beaufschlagung einer Hydraulikkammer 29 mit einem Hydraulikfluid bewegt (siehe Fig. 2). Füllt sich die Kammer 29 mit dem Fluid, drückt sie einen Kolben 29a, an dem der Setzstempel 28 befestigt ist, nach unten. Die Bewegung S des Selbststempels 28 entlang einer Setzachse A kann dabei durch einen Sensor 29b, der mit einer an dem Setzstempel 28 angeordneten, konischen Hülse 29c zusammenwirkt, überwacht werden (siehe Fig. 3).

Bei dem Umform- und Setzvorgang liegt das Werkstück 12 auf einer Matrize 30 auf. Die Matrize 30 ist lösbar an der Formbacke 20 angebracht, um bei Bedarf auf einfache Weise gewechselt werden zu können.

In Fig. 2 ist zu sehen, dass die Formbacken 18, 20 durch Schließen der Werkzeughälften 14 das Werkstück 12 derart gegen die Matrize 30 gepresst haben, dass sich eine lokale Erhebung 31 gebildet hat. Anschließend oder bereits während des Schließvorgangs der Werkzeughälften 14 wird das Funktionselement 24 mittels des Setzstempels 28 herangeführt.

Das Schließen der Werkzeughälften 14 erfolgt durch einen Antrieb, der separat von dem Hydraulikantrieb der Setzeinrichtung 22 betätigbar ist. Dadurch ist die zeitliche Abfolge des Schließens der Werkzeughälften 14 (und damit auch das Umformen des Werkstücks 12) und des Setzens des Elements 24 an die jeweils vorliegenden Gegebenheiten anpassbar.

In Fig. 3 ist die Vorrichtung 10 in einem Zustand zu sehen, bei dem die Werkzeughälften 14 weiterhin geschlossen sind. Durch den Setzstempel 28 wurde das Funktionselementen 24 an dem durch die Erhebung 31 gebildeten Setzpunkt an dem Werkstück 12 befestigt. Dabei hat das Element 24 einen Butzen 32 aus dem Werkstück 12 gestanzt. Das Element 24 ist folglich ein selbststanzendes Element. Das erfindungsgemäße Konzept kann jedoch auch bei der Befestigung von Elementen eingesetzt werden, die in vorgefertigte Löcher eingebracht werden.

Durch die Formgebung der Matrize 30 wurde Material des Werkstücks 12 in einen Aufnahmeraum des Elements 24 gedrückt, wodurch ein das Element 24 an dem Werkstück 12 sichernder Hinterschnitt erzeugt wurde.

Der durch das selbststanzende Funktionselementen 24 herausgetrennte Butzen 32 wird mittels eines koaxial zu dem Setzstempel 28 bewegbaren Ausstoßstempel 34 aus dem Element 24 ausgestoßen. Dieser dringt durch eine zentrale Öffnung des als Mutterelement ausgebildeten Funktionselements 24 und drückt den Butzen 32 nach unten aus dem Element 24 heraus, sodass er durch Kanäle 36, 38 in der Matrize 30 bzw. in der Formbacke 20 abgeführt werden kann.

Bei der anhand der Fig. 1 bis 3 beschriebenen Vorrichtung 10 sind die Bewegungen U der Werkzeughälften 14 und die Bewegung S des Setzstempels 28 parallel ausgerichtet. Bei komplexeren Geometrien des Werkstücks 12, die beispielsweise durch eine Umformung mittels der Werkzeughälften 14 erst erzeugt werden kann, ist es aber auch möglich, abweichende Bewegungsrichtungen U, A vorzusehen. Beispielsweise kann die Setzeinrichtung 22 derart ausgebildet und angeordnet sein, dass die Bewegung des Selbststempels 28 leicht schräg zu der Bewegungsrichtungen U der Werkzeughälften 14 beim Schließvorgang erfolgt. Dies ist in Fig. 3 durch die beispielhaft dargestellten alternativen Setzachse A' und A" angedeutet. So können Elemente 24 an Setzpunkten befestigt werden, in denen sich das Werkstück 12 schräg zur Bewegungsrichtung der Werkzeughälften 14 erstreckt. Vorzugsweise wird die Neigung der schrägen Setzachse A', A" so gewählt, dass diese senkrecht zu der Erstreckung des Werkstücks 12 an dem Setzpunkte steht.

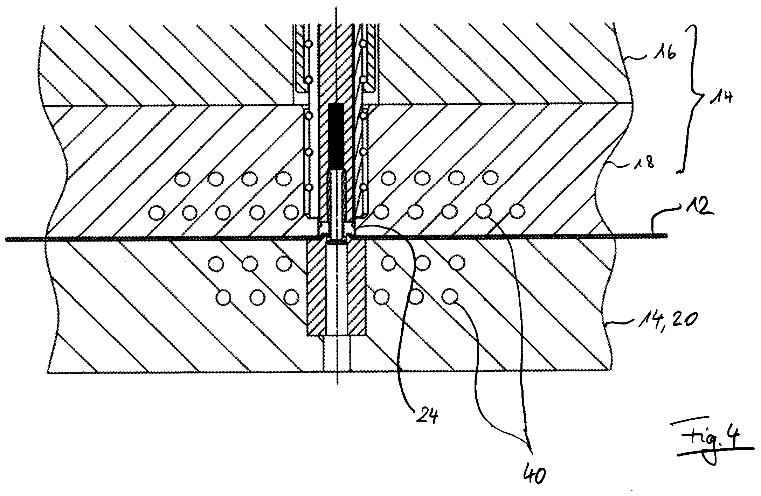

Fig. 4 zeigt einen vergrößerten Ausschnitt der Fig. 3, sodass das an dem Werkstück 12 befestigte Element 24 besser zu erkennen ist. Außerdem ist deutlicher zu sehen, wie der Ausstoßstempel 34 den Butzen 32 aus dem Element 24 austreibt.

Ferner sind Fluidkanäle 40 zu erkennen, die sich durch die Formbacken 18, 20 erstrecken. Mittels eines geeignet temperierten Fluids, das durch die Fluidkanäle 40 geleitet wird, können die Formbacken 18, 20 lokal bedarfsgerecht geheizt oder gekühlt werden. Dies kann beispielsweise vorteilhaft sein, um das Werkstück 12 in einem Bereich um den Setzpunkt in einem für den Setzprozess geeigneten Temperaturfenster zu halten.

In Fig. 4 ist zu sehen, dass die Anordnung und Anzahl der Kanäle 40 in der Formbacke 40 anders ist als in der Formbacke 18. In dem vorliegenden Anwendungsfall ist diese unsymmetrische Ausgestaltung von Vorteil. Grundsätzlich kann die Geometrie (z.B. Durchmesser, Formgebung) und/oder die Anordnung und/oder die Anzahl der Kanäle 40 frei gewählt werden. Es ist auch denkbar, anstelle einer Fluidheizung/-kühlung andere Vorrichtungen zur thermischen Konditionierung (Konditionierungsvorrichtung) der Formbacken 18, 20 bzw. des Werkstücks 12 vorzusehen. Beispielsweise können - zusätzlich oder alternativ - elektrisch betreibbare Heizdrähte vorgesehen sein.

Die Konditionierungsvorrichtung kann steuerbar ausgestaltet sein, um die jeweils vorliegenden Anforderungen gerecht werden zu können. Bevorzugt ist die Konditionierungseinrichtung flexibel ausgelegt, sodass mit ihrer Hilfe ohne komplexere Umgestaltung verschiedenartige Temperaturprofile erzeugt werden können. Beispielsweise kann vorgesehen sein, dass nicht alle Kanäle 40 mit einem Heiz- oder Kühlfluid beaufschlagt werden müssen und/oder das bestimmte Heizdrähte selektiv bestromt werden können, um die Formbacken 18, 20 und letztlich damit das Werkstück 12 lokal bedarfsgerecht thermischen zu konditionieren. Insbesondere sind die thermische Konditionierungseinrichtung und eine ihr zugeordnete Steuereinrichtung derart ausgestaltet, dass die thermische Beeinflussung räumlich und/oder zeitlich variabel veränderlich ist. Beispielsweise kann sie sogar während eines Setzprozesses bedarfsgerecht angepasst werden.

Grundsätzlich ist es auch möglich, eine thermische Konditionierungseinrichtung (zum Heizen und/oder Kühlen) an der Setzeinrichtung 22 vorzusehen, um auf die Setzeinrichtung 22 selbst und/oder die Formbacke 18 einzuwirken. Denkbar wäre auch, die Temperatur des Funktionselements 24 zu beeinflussen.

Die Vorrichtung 10 kann zumindest einen, bevorzugt mehrere Sensoren aufweisen (nicht gezeigt) mittels derer Prozessparameter erfasst werden, um die Qualität der erzeugten Verbindung zwischen dem Funktionselement 24 und dem Werkstück 12 abschätzen zu können. Die erfassten Daten können mit hinterlegten Schwellwerten abgeglichen werden, sodass Warnsignale ausgegeben werden können, wenn diese Schwellwerte unter oder überschritten werden. Die erfassten und/oder ermittelten Daten können zu Dokumentationszwecken mit Daten des Werkstücks 12 (beispielsweise eine eindeutige Werkstückidentifikation) verknüpft werden, um lückenlose Qualitätsnachweise führen zu können.

Solche Sensoren können der Setzeinrichtung 22 zugeordnet sein, um beispielsweise während des Setzprozesses die auf das jeweilige Funktionselement 24 wirkende Presskraft (Setzkraft) zu erfassen. Es kann auch die Setzbewegung S selbst überwacht werden, indem beispielsweise der zurückgelegte Weg, die Geschwindigkeit und/oder die Beschleunigung als Funktion der Zeit gemessen wird.

Mit alternativen oder zusätzlichen Sensoren kann beispielsweise eine zwischen den Werkzeughälften 14 wirkende Presskraft und/oder ein charakteristischer Parameter der Umformbewegung (beispielsweise der zurückgelegte Weg, die Geschwindigkeit und/oder die Beschleunigung) erfasst werden. Auch eine Erfassung zumindest eines charakteristischen Parameter der ersten und/oder der zweiten Werkzeughälfte ist denkbar, wie etwa ein Temperatur der Werkzeughälften 14. sind mehrere Temperatursensoren vorgesehen, so kann auch ein jeweiliges Temperaturprofil der Werkzeughälften 14 (z.B. in einem Bereich um den Setzpunkt) ermittelt werden. Durch einen Abgleich des ermittelten IST-Profils mit einem angestrebten SOLL-Profil kann eine unerwünschte Abweichung festgestellt und die thermische Beeinflussung entsprechend angepasst werden.

Die Vorrichtung 10 zeichnete sich durch zwei grundsätzliche Maßnahmen aus, mittels derer sich ein Umform- und Setzprozess optimieren lässt. Einerseits wird die Setzeinrichtung 22 unabhängig von der für die Umformung verantwortlichen Werkzeughälften 14 betrieben, sodass der jeweils optimale Setzzeitpunkt gewählt werden kann, beispielsweise wenn sich das Werkstück 12 bereits etwas abgekühlt hat und sich in einem geeigneten Temperaturfenster befindet.

Andererseits ist eine thermische Konditionierung der Werkzeughälften 14, insbesondere der Formbacke in 18, 20, vorgesehen, wodurch dem Werkstück 12 bedarfsgerecht Wärme zugeführt oder von diesem abgeführt werden kann, unter anderem um es in einen für das Setzen des Funktionselements 24 geeignetes Temperaturfenster zu bringen oder dort zu halten. Diese Maßnahme kann durch eine der Setzeinrichtung 22 zugeordnete thermische Konditionierungseinrichtung ergänzt werden.

Obwohl diese beiden grundsätzlichen Maßnahmen in der Vorrichtung 10 verwirklicht sind, versteht sich, dass sie auch unabhängig voneinander zum Einsatz gelangen können.

Abweichend von dem gezeigten Ausführungsbeispiel kann auch vorgesehen sein, dass die Setzbewegung S umgekehrt ist, d.h. eine Bewegung von unten nach oben umfasst. Auch die Bewegungsrichtung U der Backen 18, 20 muss nicht zwingend in der Vertikalen erfolgen. Andere Winkellagen sind denkbar. Gleiches gilt für die Setzbewegung S.

### Bezugszeichenliste

- 10: Vorrichtung
- 12: Werkstück
- 14: Werkzeughälfte
- 16: Grundkörper
- 18, 20: Formbacke
- 22: Setzeinrichtung
- 24: Funktionselemente
- 26: Schlauch
- 28: Setzstempel
- 29: Hydraulikkammer
- 29a: Kolben
- 29b: Sensor
- 29c: Hülse
- 30: Matrize
- 31: Erhebung
- 32: Butzen
- 34: Ausstoßstempel
- 36, 38: Kanal
- 40: Fluidkanal

- A, A', A": Setzachse
- U: Bewegungsrichtung der Formbacken 18, 20
- S: Setzbewegung

## Patentansprüche

1. Vorrichtung zum Bearbeiten eines Werkstücks (12) umfassend
zumindest eine Presseinrichtung mit einer ersten Werkzeughälfte (14) und mit einer zweiten Werkzeughälfte (14), die in einer Pressbewegung (U) aufeinander zu bewegbar sind, insbesondere zur Umformung und/oder zum Presshärten des Werkstücks, und
zumindest eine Setzeinrichtung (22) zur Befestigung zumindest eines Funktionselements (24) in einer Setzbewegung (S) an einem Setzpunkt an dem Werkstück,
wobei die Setzeinrichtung an der ersten Werkzeughälfte oder der zweiten Werkzeughälfte angeordnet ist und
wobei die erste und/oder die zweite Werkzeughälfte (14) eine Konditioniereinrichtung (40) aufweisen, mit der die erste Werkzeughälfte und/oder die zweite Werkzeughälfte thermisch beeinflussbar, insbesondere selektiv thermisch beeinflussbar ist.

2. Vorrichtung nach Anspruch 1,
wobei die Konditioniereinrichtung (40) derart ausgebildet und eingerichtet ist, dass die die erste und/oder die zweite Werkzeughälfte (14) an und/oder in einem Bereich benachbart zu dem Setzpunkt selektiv thermisch beeinflussbar ist.

3. Vorrichtung nach Anspruch 1 oder 2,
wobei die Konditioniereinrichtung (40) derart ausgebildet und eingerichtet ist, dass ein gewünschtes Temperaturprofil in der ersten und/oder der zweiten Werkzeughälfte (14) erzeugbar ist.

4. Vorrichtung nach zumindest einem der vorstehenden Ansprüche, wobei die Setzeinrichtung (22) eine Konditioniereinrichtung aufweist, mit der die Setzeinrichtung und/oder das Werkstück (14) und/oder das Funktionselement (24) thermisch beeinflussbar, insbesondere selektiv beeinflussbar ist.

5. Vorrichtung nach zumindest einem der vorstehenden Ansprüche, wobei die Konditioniereinrichtung (40) eine Heizeinrichtung und/oder eine Kühleinrichtung umfasst.

6. Vorrichtung nach zumindest einem der vorstehenden Ansprüche, wobei die Konditioniereinrichtung (40) elektrisch und/oder mit einem Fluid betreibbar ist.

7. Vorrichtung nach zumindest einem der vorstehenden Ansprüche, wobei die Konditioniereinrichtung (40) derart ausgebildet und eingerichtet ist, dass die thermische Beeinflussung zeitlich und/oder räumlich veränderbar ist.

8. Vorrichtung nach zumindest einem der vorstehenden Ansprüche, wobei eine Steuereinrichtung vorgesehen ist, mit der die Konditioniereinrichtung (40) selektiv steuerbar ist.

9. Vorrichtung nach zumindest einem der vorstehenden Ansprüche, wobei die Setzeinrichtung (22) zumindest eine Sensoreinrichtung umfasst, mit der eine auf das Funktionselement (24) wirkende Setzkraft und/oder zumindest ein charakteristischer Parameter der Setzbewegung (S) erfassbar ist.

10. Vorrichtung nach zumindest einem der vorstehenden Ansprüche, wobei die erste und/oder die zweite Werkzeughälfte (14) zumindest eine Sensoreinrichtung umfassen, mit der eine zwischen den Werkzeughälften wirkende Presskraft und/oder ein charakteristischer Parameter der Pressbewegung (U) und/oder ein charakteristischer Parameter der ersten und/oder der zweiten Werkzeughälfte erfassbar ist.

11. Vorrichtung nach einem der vorstehenden Ansprüche,
wobei die Vorrichtung derart ausgebildet und eingerichtet ist, dass ein selbststanzendes Funktionselement (24) an dem Werkstück (12) befestigbar ist.

12. Verfahren zum Bearbeiten eines Werkstücks (14), insbesondere wobei eine Vorrichtung gemäß einem der Ansprüche 1 bis 17 eingesetzt wird,
wobei eine erste Werkzeughälfte (14) und eine zweite Werkzeughälfte (14) einer Presseinrichtung in einer Pressbewegung (U) aufeinander zu bewegt werden insbesondere zur Umformung und/oder zum Presshärten des Werkstücks, und
wobei ein Funktionselement (24) in einer Setzbewegung (S) mittels einer Setzeinrichtung (22) an einem Setzpunkt gegen das Werkstück gepresst wird, um es daran zu befestigen,
wobei die erste und/oder die zweite Werkzeughälfte (14) mittels einer Konditioniereinrichtung (40) thermisch beeinflusst, insbesondere selektiv thermisch beeinflusst werden.

13. Verfahren nach Anspruch 12,
wobei die Setzeinrichtung (22) und/oder das Werkstück (12) und/oder das Funktionselement (24) mittels einer der Setzeinrichtung zugeordneten Konditioniereinrichtung thermisch beeinflusst, insbesondere selektiv beeinflusst werden.

14. Verfahren nach Anspruch 12 oder 13,
wobei die thermische Beeinflussung räumlich und/oder zeitlich variiert wird.

15. Verfahren nach zumindest einem der Ansprüche 12 bis 14,
wobei mittels einer Sensoreinrichtung eine auf das Funktionselement (24) wirkende Setzkraft und/oder zumindest ein charakteristischer Parameter der Setzbewegung (S) erfasst wird und/oder
wobei mittels einer Sensoreinrichtung eine zwischen den Werkzeughälften (14) wirkende Presskraft und/oder ein charakteristischer Parameter der Pressbewegung (U) und/oder ein charakteristischer Parameter der ersten und/oder der zweiten Werkzeughälfte erfasst wird.
